# EUROPEAN PATENT SPECIFICATION

(11) **EP 3 624 916 B1**
(45) Date of publication and mention of the grant of the patent: **23.02.2022**
(21) Application number: 18788666.8
(22) Date of filing: 09.05.2018
(51) Int. Cl.: B01D 19/00, B60H 1/00, F25B 43/00

(54) **HEAT EXCHANGER FOR A REFRIGERANT CIRCUIT**
WÄRMETAUSCHER FÜR EINEN KÄLTEMITTELKREISLAUF
ÉCHANGEUR DE CHALEUR POUR CIRCUIT DE FLUIDE FRIGORIGÈNE

(30) Priority: 19.05.2017 FR 1754468
(43) Date of publication of application: 25.03.2020
(73) Proprietor: Valeo Systemes Thermiques, 78322 Le Mesnil Saint-Denis Cedex (FR)
(72) Inventor: AZZOUZ, Kamel, 78322 Le Mesnil Saint Denis Cedex (FR)
(74) Representative: Valeo Systèmes Thermiques
(86) International application number: PCT/EP2018/062054
(87) International publication number: WO 2018/210664

(56) References cited:
- EP-A1- 2 759 327
- DE-A1-102004 049 718
- US-A- 857 096
- US-A- 4 482 364
- US-A- 5 218 832
- US-B2- 7 694 528

## Description

The present invention relates to the field of separation of the liquid and gaseous phases of a refrigerant in a refrigerant circuit for an installation for ventilation, heating and/or air conditioning for vehicles, notably automobiles.

Said circuit mainly comprises: a compressor, a first heat exchanger such as a condenser or a gas cooler depending on the nature of the refrigerant, a pressure reducing valve and a second heat exchanger such as an evaporator. These various devices alter the physical nature of the refrigerant, causing it to pass successively from a gaseous state to a liquid state and vice versa during its passage through the various devices. These changes in physical nature are brought about by changes in pressure and/or temperature of the refrigerant along the circuit.

The efficiency of the refrigerant circuit is higher if the fluid fed into the evaporator is in liquid form. In fact, as the gas phase is not used by the evaporator, its presence represents an appreciable loss of efficiency. Now, it has been measured that generally at the inlet of the evaporator, about 30 wt% of the refrigerant is in the gaseous state and about 70 wt% is in the liquid state.

To guarantee the operation and efficiency of a refrigerant circuit of this kind, it is therefore essential that the refrigerant fed into the evaporator is in the liquid phase for the most part. For this purpose, inclusion of a liquid-gas phase separator, upstream of the evaporator in the direction of circulation of the refrigerant in the circuit, is known (see e.g. US7694528B2).

However, these separators have limited capacity for separating the different phases, and their architecture is not often favourable for easy integration in a refrigerant circuit with reduced overall dimensions. The invention proposes to improve this situation.

In this context, the aim of the invention is to propose a heat exchanger that comprises a liquid-gas phase separator that makes it possible to increase the efficiency of the evaporator in the circuit while reducing its overall dimensions, notably by means of a particular structure and arrangement.

For this purpose, the invention relates to a heat exchanger as defined in claim 1.

In the heat exchanger that incorporates the phase separator according to the invention, a two-phase mixture of refrigerant is fed into the phase separating element placed in the first channel. After passing through the pores and/or fibres of the separating element, the gas phase contained in this two-phase mixture is conveyed, via the aforementioned transfer passage or passages, to the second channel. The transfer passage or passages use for example the shortest path for joining the channels together.

The term "longitudinally" signifies that each channel extends according to its length, i.e. according to its largest dimension, along the first or second axis, the first axis and the second axis being different from one another.

The channels are located side by side, i.e. beside one another. Thus, this means that the channels are different from one another in the sense that they are neither end-to-end, nor concentric, i.e. they are not integrated in one another.

According to various features of the invention taken alone or in combination, it may be envisaged that:
- the phase separating element is configured to be permeable to a gas phase of the refrigerant. During flow of the two-phase mixture in the phase separating element, the gas phase crosses the wall of the latter, notably by passing through the pores and/or the entangled fibres.
- The phase separating element is configured to be impermeable to a liquid phase of the refrigerant. Impermeable means that the phase separating element prevents at least 90% of the liquid phase from passing through it. The pores and/or the fibres are dimensioned to block the passage of the liquid phase through the wall of the separating element.
- The separating element comprises a part that is intended to be impermeable to the liquid phase of the refrigerant, said impermeable part being located on an outside surface of the separating element.
- The phase separating element is laid at least at one of its ends against an inside face of the first channel. The two-phase mixture circulating in the first channel therefore flows from end to end of the phase separating element.
- The phase separating element is advantageously in the form of an approximately cylindrical tube inserted in the first channel, concentrically with the latter. Here, and in the rest of the text, the term "approximately" signifies that the manufacturing tolerances are included.
- The phase separating element comprises a hollow central part. It is through this central part that the refrigerant circulates in the separating element.
- The separator comprises a chamber between the phase separating element and an inside face of the first channel. The presence of this chamber makes it possible to create a space all around the separating element where the gas phase accumulates and is free to reach the transfer passages.
- The chamber is delimited longitudinally by contact of at least one of the longitudinal ends of the separating element with the inside face of the first channel. The longitudinal end or ends of the separating element then allow the chamber to be delimited, which can prevent the gas present in the chamber remixing with the liquid phase. In other words, this is equivalent to saying that the separating element comprises at least one shoulder between a recessed portion and a projecting portion of the recessed portion, the projecting portion delimiting the chamber longitudinally and comprising a peripheral face that is laid against the inside face of the first channel.
- The first channel and the second channel are approximately parallel to one another.
   "Approximately" means that after allowing for the manufacturing tolerances, the channels are parallel. More precisely, it means that the first axis of the first channel is parallel to the second axis of the second channel.
- The channels are approximately cylindrical. "Approximately" means that after allowing for the manufacturing tolerances, the channels are cylindrical.
- The transfer passage or passages joining the first channel to the second channel are arranged approximately perpendicularly to at least one of the first channel or the second channel, notably relative to their respective axes.
- The transfer passage or passages joining the first channel and the second channel is/are arranged approximately perpendicularly both to the first channel and to the second channel. If the channels are circular, the transfer passage(s) extend radially relative to at least one of the first channel or the second channel, or even both. The extension axis of the transfer passage passes through the centre of the first channel.
- The transfer passage or passages joining the first channel and the second channel are arranged approximately tangentially relative to an inside face of at least one of the first or second channel.
- The transfer passage or passages joining the first channel and the second channel are arranged approximately tangentially relative both to an inside face of the first channel and an inside face of the second channel.
- The transfer passage or passages open into the first channel with respect to the phase separating element. Thus, when the gas phase contained in the two-phase mixture of the refrigerant has crossed the wall of the phase separating element, it is aspirated, via this or these transfer passage(s), to the second channel mentioned above, in which the refrigerant consisting predominantly of gas phase then circulates.
- The transfer passage or passages open into the first channel only with respect to the phase separating element.
- One and the same straight line passes through all the centres of the transfer passages.
- The phase separating element extends on a portion of a length of the first channel.
- The phase separating element extends over whole or part of the dimension of longitudinal extension of the first channel. In other words, according to different embodiments of the invention, the phase separating element and the first channel are of the same length, or the phase separating element is shorter than the first channel. In the latter case, the phase separating element will be placed advantageously, but not necessarily, near the inlet of the first channel, via which the two-phase mixture is admitted, in order to optimize the overall dimensions of the phase separator according to the invention.
- The phase separating element is located near an inlet of refrigerant in the first channel.
- The phase separating element and the first channel are of approximately the same length in the direction of the first axis.
- Several transfer passages are arranged regularly along the portion of the first channel occupied by the phase separating element. In all cases, the placement of the transfer passage or passages along the portion of the first channel occupied by the phase separating element is defined to ensure optimum transfer, both in terms of quantity and of speed of passage, of the portion of fluid in gas phase to the second channel of the phase separator according to the invention.

A slight negative pressure, maintained by the flow of the two-phase mixture within the first channel, promotes passage of the gas phase through the transfer passage or passages joining the first channel and the second channel. As the two-phase mixture flows through the phase separating element, said mixture therefore becomes depleted of gas phase, until there is only refrigerant in liquid phase circulating in the phase separating element and the first channel. The paths of the liquid phase and of the gas phase are thus completely separate from one another, which limits the risks of recontamination of one of the phases by the other. For further limitation, or even elimination of this possible recontamination, the fluid in gas phase is, advantageously, entrained within the second channel, in the opposite direction to that in which the fluid flows in the first channel and in the phase separating element.
- The phase separating element comprises a flow disruptor, in a hollow portion thereof. This flow disruptor makes it possible to form an obstacle to the flow of the two-phase mixture of refrigerant in the phase separating element, while increasing the contact area on which the liquid phase can accumulate. In fact, the flow disruptor deflects the two-phase mixture of refrigerant and brings it into contact with the wall of the phase separating element. The efficiency of phase separation is thus improved, guaranteeing that all of the gas phase is extracted from the two-phase mixture circulating in the phase separating element.

The introduction of this flow disruptor makes it possible to increase the residence time of the two-phase mixture in the phase separating element, and thus increase the efficiency of phase separation. As a result, at constant efficiency, the length of the phase separating element and the length of the first channel in which the flow disruptor is inserted may be reduced, thus reducing the overall dimensions of the phase separator according to the invention.
- The flow disruptor comprises at least one screw.
- The screw comprises a plurality of flights offset longitudinally along a central shaft of the screw. The offset is thus angular.
- The screw extends along the separating element.
- The screw has a central shaft located at the centre of the separating element.
- The flow disruptor and the phase separating element are of approximately the same length, the length being measured along the first longitudinal axis.
- The screw comprises at least four inclined flights forming circular arcs, each flight being offset from the flight underneath it by an angle of 90 degrees about the axis of the screw.
- The screw occupies approximately the whole of the inside diameter of the separating element
- The phase separator is formed by two plates assembled against one another.
- Each of the two plates comprises half the channels.

A heat exchanger incorporating a liquid-gas phase separator according to the invention as just described makes it possible to accomplish effectively, and with reduced overall dimensions, separation between the liquid and gaseous phases of a two-phase mixture of a refrigerant in a refrigerant circuit of a system for ventilation and/or heating and/or air conditioning of a refrigerating circuit of a motor vehicle.

It is for the heat exchanger of the invention further envisaged that:
- the first channel of the liquid-gas phase separator is positioned at a refrigerant inlet of the heat exchanger. More preferably, the inlet of the heat exchanger is located upstream of a collecting box of the heat exchanger, upstream and downstream being defined in the direction of circulation of the refrigerant in the heat exchanger.
- The first channel of the phase separator may be located upstream of an inlet hole of the collecting box of the heat exchanger, upstream and downstream being defined in the direction of circulation of the refrigerant in the heat exchanger.
- The second channel of the liquid-gas phase separator is positioned at a refrigerant outlet of the heat exchanger. More preferably, the outlet of the heat exchanger is located downstream of an outlet of the collecting box of the heat exchanger, upstream and downstream being defined in the direction of circulation of the refrigerant in the heat exchanger.
- The inlet and the outlet of the heat exchanger open out laterally relative to a plane by which an air stream to be cooled enters or leaves the evaporator.
- The heat exchanger is used as an evaporator.

The invention thus relates to a refrigerant circuit of an installation for ventilation, heating and/or air conditioning of a vehicle, comprising at least:
- a compressor,
- a condenser,
- a pressure reducing valve,
- an evaporator, and
- a refrigerant that circulates in the components listed above,
wherein the evaporator is configured as the heat exchanger of the invention as defined in claim 1.

Other features, details and advantages of the invention and of its operation will become clearer on reading the description given hereunder as a guide, referring to the appended figures, in which:
- Fig. 1 is a schematic illustration of a refrigerant circuit of a motor vehicle,
- Fig. 2 is a schematic perspective, transparent view of a phase separator according to a first embodiment in which the phase separator is an individual phase separator,
- Fig. 3 is a schematic longitudinal sectional view of the phase separator, according to the first embodiment shown in Fig. 2,
- Figs. 4A and 4B are schematic views, in perspective, from two different viewing angles, of an example of a flow disruptor of the separator,
- Fig. 5 is a schematic view of a second embodiment related to the invention, according to which the phase separator is incorporated in a heat exchanger of the evaporator type, of a refrigerant circuit of a motor vehicle, and
- Fig. 6 is a cut-away view of the evaporator in Fig. 5, in which the phase separator according to the invention is incorporated.

It should be noted that for all of the figures, the same elements are denoted by the same reference numbers.

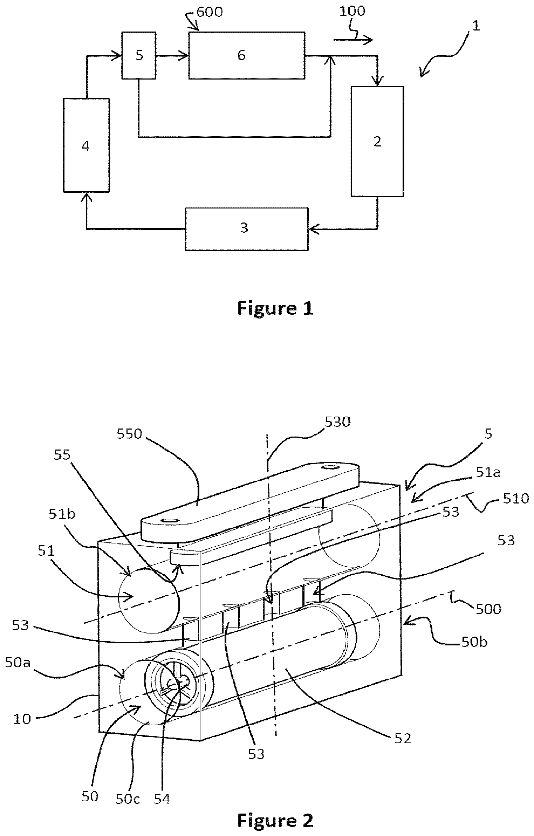

Fig. 1 is a schematic representation of a circuit 1 of a refrigerant 100 that interacts with an installation for ventilation, heating and/or air conditioning of a motor vehicle. The circuit 1 comprises a compressor 2, a condenser 3, a pressure reducing valve 4 and a heat exchanger 6, which may notably be of the evaporator type 600 or of the liquid cooler type, also called "chiller". The refrigerant 100 circulates through these elements successively, along the circuit 1.

The refrigerant 100 is admitted, in essentially gaseous form, into the compressor 2. At the outlet of the compressor 2, the refrigerant 100, which has undergone compression, is in the form of a gas, the pressure and temperature of which have increased. The refrigerant 100 is then fed into the condenser 3, in which it undergoes a first phase change and is converted to liquid. During this phase change, the pressure remains constant and the temperature of the refrigerant 100 decreases, the refrigerant 100 giving up a part of its heat to an external medium by means of the condenser 3.

The refrigerant 100, essentially in liquid form at the outlet of the condenser 3, is then conveyed to a pressure reducing valve 4, in which it undergoes expansion, resulting in the production of a two-phase mixture of refrigerant 100 in liquid form and in gaseous form, notably at low temperature. The two-phase mixture of refrigerant 100 at the end of the expansion operation, i.e. at the outlet of the pressure reducing valve 4, may comprise about 70 wt% of refrigerant 100 in liquid form, also called liquid phase, and about 30 wt% of refrigerant 100 in gaseous form, also called gas phase. According to one embodiment, the liquid phase of the refrigerant 100 comprises oil.

The refrigerant 100 in the form of a two-phase mixture is then conveyed to the heat exchanger 6, for example of the evaporator type 600 in which it undergoes a new change and where the liquid phase of the refrigerant 100 is converted to gas, which is then led back to the compressor 2 for a new cycle. This transition from the liquid state to the gaseous state in the evaporator 600 makes it possible to lower the temperature of an external medium, for example of an air stream sent into the passenger compartment of the vehicle and circulating in the installation for ventilation, heating and/or air conditioning, or of a liquid.

The efficiency of the heat exchanger 6 is linked directly to the fact that the fluid fed into it consists essentially of liquid phase. For this purpose, the circuit 1 comprises a phase separator 5 of the refrigerant 100, located between the pressure reducing valve 4 and the heat exchanger 6. A set of valves, pipes and control elements, not shown in detail in the figure, allows operation and control of the assembly formed by the compressor 2, condenser 3, pressure reducing valve 4, phase separator 5 and heat exchanger 6.

The phase separator 5 according to the invention allows efficient separation between the liquid phase and the gas phase of the refrigerant 100 leaving the pressure reducing valve 4. A phase separator 5 of this kind is illustrated schematically in Fig. 2.

Referring to Fig. 2, the phase separator 5 comprises at least two channels 50, 51. The channels 50, 51 are located side by side, i.e. beside one another. Thus, it will be understood that the channels are separate from one another in the sense that they are neither end-to-end, nor concentric, i.e. they are not integrated in one another. Here, the phase separator 5 comprises two channels with a first channel 50 and a second channel 51, these channels 50, 51 being for example cylindrical. The first channel 50 comprises an inlet 50a of refrigerant 100, for example in a two-phase state, and an outlet 50b of refrigerant 100 in a liquid state. The second channel 51 comprises an inlet 51a and an outlet 51b of the refrigerant 100 in a gaseous state. It will be understood that in circuit 1, the first channel 50 is connected on the one hand to an outlet of the pressure reducing valve 4 and on the other hand to an inlet of the evaporator 600 whereas the second channel 51 is connected on the one hand to an outlet of the evaporator 600 and on the other hand to an inlet of the compressor 2.

Each of these channels 50, 51 extends longitudinally, in the direction of a first axis 500 for the first channel 50, and in the direction of a second axis 510 for the second channel 51, respectively. According to the embodiment example illustrated in Fig. 2, the first channel 50 and the second channel 51 are parallel to one another. In other words, the respective axes of longitudinal extension, of the first channel 50 and of the second channel 51, are strictly parallel to one another. More precisely, the first axis 500 and the second axis 510 of the channels 50, 51 are in one and the same plane. Alternatively, the respective axes of longitudinal extension 500, 510, of the first channel 50 and of the second channel 51 intersect, notably at the centre of the phase separator 5, with the channels 50, 51 extending in parallel planes, for example one above the other. The respective axes of longitudinal extension 500, 510 of the first channel 50 and of the second channel 51 may also be inclined relative to one another.

The phase separator 5 also comprises, inserted in a portion at least of the first channel 50, a phase separating element 52 comprising pores and/or fibres, notably at the periphery of the separating element 52. The separating element 52 comprises a wall 520, in this case of cylindrical shape, and longitudinal ends, with a first longitudinal end 520a oriented towards the inlet 50a of the first channel 50 and a second longitudinal end 520b oriented towards the outlet 50b of the first channel 50. The longitudinal ends 520a, 520b may form a shoulder relative to a body of the separating element 52.

The pores and/or the fibres of the separating element 52 may have different filtration capacities depending on the nature of the fluid, notably depending on whether it is in the gaseous or liquid state. These pores and/or these fibres may also be in the form of a membrane. Owing to its structure and/or its composition, the separating element 52 is permeable to the gas phase of the refrigerant 100 and impermeable to the liquid phase of this same refrigerant 100. "Impermeable" means that the separating element 52 prevents the passage of at least 90% of the liquid phase through its wall 520, which allows the gas phase to pass through.

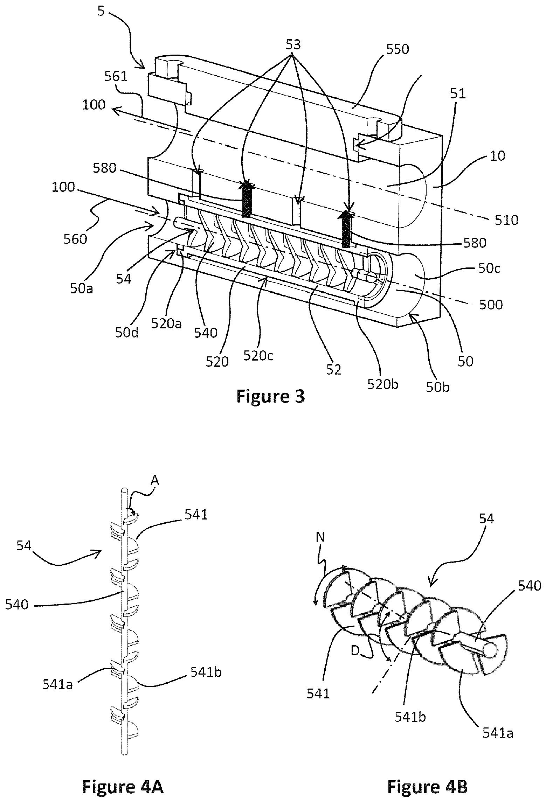

More particularly, as shown in Figs. 2 and 3, the separating element 52 is in the form of an approximately cylindrical hollow tube, whose longitudinal axis coincides with the axis 500 of longitudinal extension of the first channel 50. The tubular shape of the separating element 52 can then, on the one hand, allow the gas phase of the refrigerant 100 to pass through its wall 520 and, on the other hand, allow the liquid phase of the refrigerant 100 to flow along the separating element 52, notably passing through its hollow portion. In other words, the separating element 52 comprises a through hole allowing passage of the liquid phase of the refrigerant 100. It is also possible for the separating element 52 to comprise different layers, with a layer at its centre that is permeable to the liquid phase and another layer at its periphery that is impermeable to the liquid phase of the refrigerant 100.

According to the embodiment example illustrated, the length of the phase separating element 52 is appreciably less than the length of the first channel 50 in the direction of the first longitudinal axis 500. The separating element 52 may then be centred between the inlet 50a and the outlet 50b of the first channel 50. The separating element 52 could also be placed near the inlet 50a of the first channel 50. According to a variant embodiment, the length of the phase separating element 52 is approximately equal to the length of the first channel 50 in the direction of the first longitudinal axis 500.

As can be seen in Fig. 3, the two longitudinal ends 520a, 520b of the separating element 52 are laid against an inside face 50c of the first channel 50 whereas the body of the separating element 52 has a clearance with the first channel 50, so as to create a chamber 520c between the inside face 50c of the first channel 50 and the separating element 52. According to a variant embodiment, one of its two longitudinal ends 520a, 520b is laid against the inside face 50c of the first channel 50. According to another variant embodiment, the separating element 52 may be laid completely against an inside face 50c of the first channel 50.

Moreover, the phase separator 5 also comprises at least one transfer passage 53 joining the channels 50, 51 together. This or these transfer passage(s) 53 open, advantageously, into the first channel 50 with respect to the phase separating element 52. According to the embodiment example more particularly illustrated in the figures, four transfer passages 53 are arranged along the first channel 50, with respect to the phase separating element 52. Advantageously, the transfer passage or passages 53 open into the first channel 50 only, with respect to the phase separating element 52.

Each of the transfer passages 53 has an extension axis 530, in this case perpendicular to the first and second axes 500, 510 of the channels 50, 51. In other words, the extension axis 530 of each of the transfer passages 53 cuts perpendicularly through at least the axis 500 of longitudinal extension of the first channel 50 and advantageously also the axis 510 of longitudinal extension of the second channel 51. More precisely, each of the transfer passages 53 is arranged approximately radially relative to the first channel 50 and optionally to the second channel 51.

According to some embodiments, each of the transfer passages 53 may be arranged approximately radially relative to at least one of the first or second channels 50, 51, or each of the transfer passages 53 may be arranged approximately tangentially relative to at least one of the first or second channels 50, 51. According to yet other embodiments, each of the transfer passages 53 may be arranged approximately tangentially relative to both the first channel 50 and the second channel 51. According to yet other embodiments, the extension axes 530 of the transfer passage or passages 53 may be wholly or partly coplanar, i.e. all comprised in one and the same plane. The transfer passages 53 may also be aligned relative to one another, and then a straight line is defined passing through each centre of the transfer passages 53.

These embodiment examples are not exhaustive, and any relative configuration of one or more of the transfer passages 53 to one another and relative to the first channel 50 and/or to the second channel 51 may be envisaged, provided that this or these transfer passage(s) 53 allow optimum transfer, to the second channel 51, of the gas phase of the refrigerant that has passed through the wall 520 of the phase separating element 52. In fact, more generally, the transfer passage or passages 53 are advantageously arranged so as to offer the shortest path of passage between the first channel 50 and the second channel 51.

The distribution of the transfer passages 53 along the first channel 50 with respect to the phase separating element 52 is defined so as to optimize the transfer of the gas phase to the second channel 51: according to various embodiments of the invention, the transfer passages 53 may therefore be regularly distributed along the first channel 50 with respect to the phase separating element 52. Here, the transfer passages 53 are regularly distributed along the portion of the first channel 50 occupied by the phase separating element 52.

The operation of the phase separator 5 according to the invention is as follows, illustrated more particularly in Fig. 3. The refrigerant 100, in liquid and gaseous form, circulates within the first channel 50 of the phase separator 5 in a first direction illustrated by the arrow 560. The refrigerant 100 then circulates inside the phase separating element 52, from one longitudinal end 520a to the other 520b of the phase separating element 52.

As the phase separating element 52 is permeable to the gas phase of the refrigerant 100 and impermeable to the liquid phase of the latter, the portion of gas phase contained in the two-phase mixture passes through the wall 520 of the phase separating element 52, whereas the liquid phase continues to circulate in the latter, and more particularly in its hollow portion. The gas phase of the refrigerant 100 is then aspirated through the transfer passage or passages 53, to the second channel 51, as is shown schematically by the arrows 580. The gas phase is then led to circulate in a direction illustrated by the arrow 561 in the second channel 51, or in an opposite direction along the branches of the separator 5. The required phase separation is thus achieved, and the two-phase mixture of refrigerant circulating at the inlet of the first channel 50 becomes depleted of gas phase as it circulates in the separating element 52, until it only consists of liquid phase at the outlet of the first channel 50.

Advantageously, a negative pressure is maintained by the evaporator 600 between the first channel 50 and the second channel 51, so as to establish an effect of aspiration to the second channel 51 to promote entrainment of the gas phase of the refrigerant to the latter. This entrainment may also be promoted by the configuration of the transfer passages 53 with respect to the first channel 50 and the second channel 51: thus, as a non-exhaustive example, a tangential configuration of one or more of the transfer passages 53 relative to at least one of the first channel 50 or second channel 51 will be able to promote entrainment of the gas phase of the refrigerant 100 to the second channel 51 by a swirling effect. It should be noted, moreover, that the circulation of the gas phase of the refrigerant in the second channel 51 takes place in a direction opposite to the circulation of the two-phase mixture of this same refrigerant 100 in the first channel 50: this also helps to promote the required phase separation.

Moreover, as shown more particularly in Fig. 2, it should be noted that a clearance zone 55 is provided on the phase separator 5, to allow passage of a tool configured for machining the transfer passage or passages 53 between the first channel 50 and the second channel 51. This clearance zone 55 is then sealed by placement of a closing element 550.

Phase separation is made even more effective by the presence of a flow disruptor 54 in the phase separating element 52. The flow disruptor 54, which can be seen in Fig. 2, is illustrated more particularly in Fig. 3 and in Figs. 4A and 4B.

Located in the phase separating element 52, the flow disruptor 54 constitutes on the one hand an obstacle to the flow of the refrigerant 100 in the phase separating element 52, and on the other hand makes it possible to increase the area of contact of the refrigerant in the phase separating element 52. In fact, the flow disruptor 54 deflects the two-phase mixture of refrigerant 100 to bring it into contact with the wall 520 of the phase separating element 52. The efficiency of phase separation is thus improved, guaranteeing that all of the gas phase is extracted from the two-phase mixture circulating in the phase separating element 52.

Moreover, the residence time of the two-phase mixture of refrigerant 100 in the phase separating element 52 is defined by the flow rate of this mixture in the latter and by the length, in its direction of longitudinal extension, of the phase separating element 52: the efficiency of phase separation is therefore greater for greater length of the phase separating element 52 and lower flow rate. By altering the linear flow of the two-phase mixture of refrigerant 100, the flow disruptor element 54 therefore increases the residence time of this two-phase mixture in the phase separating element 52 while reducing the longitudinal dimension of extension of the phase separating element 52, relative to a variant embodiment in which the separating element 52 does not comprise a flow disruptor 54. The flow disruptor 54 therefore makes it possible to produce a phase separator 5 that is more compact, for better efficiency or at equal efficiency.

According to the embodiment example illustrated in Fig. 3, the length of the flow disruptor 54 is roughly identical to the length of the phase separating element 52 in the direction of longitudinal extension of the latter. According to a variant embodiment, the length of the flow disruptor 54 is less than the length of the phase separating element 52 in the direction of longitudinal extension of the latter. In the latter case, the flow disruptor 54 may be placed near the inlet of the phase separating element 52.

Figs. 4A and 4B show that the flow disruptor 54 is in the general form of a screw. More precisely, according to this embodiment example, the flow disruptor 54 is formed from a central shaft 540, around which flights 541 are placed. The central shaft 540 of the flow disruptor 54 is advantageously placed on the central axis of the phase separating element 52. In other words, the screw formed by the flow disruptor 54 is inserted in the phase separating element 52 concentrically with the latter.

Each flight 541 forms for example approximately a quarter of a disk, and the flights 541 are staggered both angularly and longitudinally. More precisely, the flights 541 are distributed both angularly and longitudinally along the shaft 540 of the screw forming the flow disruptor 54. According to different embodiments, the flights 541 may be distributed regularly along the shaft 540, or may for example be closer together, in the longitudinal direction of the shaft 540, at one end of the flow disruptor 54 than at its opposite end.

Moreover, at least two flights, and advantageously all the flights, referenced 541a and 541b respectively, placed consecutively in the longitudinal direction of the shaft 540, are angularly displaced from one another around said shaft 540, with a displacement D of about 90 degrees. The displacement D is measured between a reference point located at the same place on each flight, i.e. the displacement D may for example be measured between two radial axes of the two flights 541a, 541b, as shown in Fig. 4B. This results in a particular arrangement, in a spiral shape, of the flights 541 along the shaft 540 of the screw forming the flow disruptor 54, in such a way that, radially, four consecutive flights 541 cover a 360-degree section of the hollow tube forming the phase separating element 52. It should be noted that the flights 541 may be inclined at an angle A relative to the central shaft 540, the angle A being for example between 20 and 90 degrees.

However, such an embodiment is not exclusive, and other embodiments may be envisaged without adversely affecting the invention. For example, each flight 541 may extend over an angular portion of disk less than or greater than 90 degrees. Two flights, referenced 541a and 541b respectively, placed consecutively in the longitudinal direction of the shaft 540, will then advantageously be angularly displaced from one another, around said shaft 540, by an angular displacement D approximately equal to N, in such a way that, radially, 360/N flights 541 placed consecutively in the longitudinal direction of the shaft 540 cover a 360-degree section of the hollow tube formed in the phase separating element

Similarly, according to other embodiments, it is entirely conceivable for the angular displacement between two flights, 541a and 541b respectively, placed consecutively in the longitudinal direction of the shaft 540 and extending over an angular portion of disk, to be angularly displaced from one another, around the shaft 540, by an angular value appreciably different from N. Whatever embodiment is chosen, in all cases there will need to be deviation that is complete as possible, of the refrigerant 100 circulating in the phase separating element 52, in order to propel it against the wall 520 of the phase separating element 52. This prevents a portion of the gas phase from circulating linearly in the phase separating element 52, and it is then necessarily brought into contact with the wall 520 that is permeable to the gas phase. Thus, phase separation is achieved that is as complete as possible, in the smallest possible space.

The invention thus makes it possible to perform efficient phase separation in reduced overall dimensions. In a refrigerant circuit 1 of the type described above and illustrated schematically in Fig. 1, it is shown to install the phase separator 5 upstream of the evaporator 600.

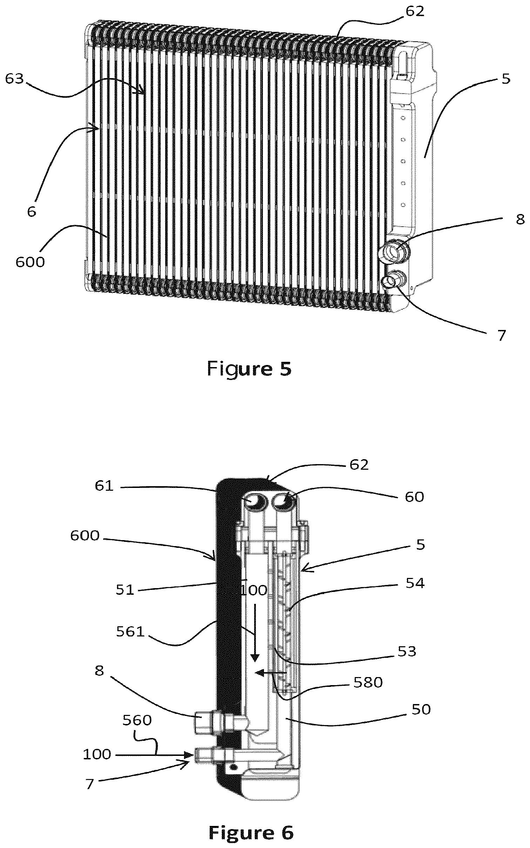

However according to the invention, the phase separator 5 is incorporated in the evaporator 600 directly. This is illustrated more particularly in Figs. 5 and 6, which show schematically a particularly advantageous possibility for installation of the phase separator 5 in the heat exchanger 6 used as an evaporator 600.

According to this embodiment, the refrigerant 100 is fed into the evaporator 600 via an intake 7 and then circulates within the first channel 50 of the phase separator 5. The refrigerant 100 is then conveyed to the phase separating element 52, which in this case comprises a flow disruptor 54. The liquid phase and the gas phase are then separated: the liquid phase is conveyed to the end 50b of the first channel 50, from where it is evacuated from the phase separator 5, and is then fed into a collecting box 62 of the evaporator 600 via the inlet 60. Circulation of the refrigerant 100 in the first channel 50 is brought about by the compressor 2 of the refrigerant circuit 100, which allows the refrigerant to travel back along the first channel 50 and reach the inlet 60, the latter being for example above the intake 7 of the evaporator 600".

Evacuation of the liquid phase from the phase separator 5 to the collecting box 62 therefore performs the role of admission of this liquid phase into a tube bundle 63 of the evaporator 600. The refrigerant 100 then undergoes a phase change by which it passes into the gaseous state during its passage in the tube bundle 63. The gas phase resulting from this phase change is then extracted via the outlet 61, which performs the role of inlet hole for the second channel 51 of the phase separator 5, in which the gas phase resulting from the phase separation performed in the phase separating element 52 also circulates, and is conveyed through the transfer passages 53. The refrigerant 100 in gaseous form is then led out of the evaporator 600 via its outlet 8. The refrigerant 100 in gaseous form is therefore directed to the compressor 2 of the refrigerant circuit 1 described above.

It can be seen that the intake 7 and the outlet 8 of the evaporator 600 are located close together, allowing compact arrangement of the channels and connectors for conveying the refrigerant 100. More precisely, the intake 7 and the outlet 8 of the evaporator 600 open out laterally relative to a plane by which an air stream to be cooled enters or leaves the evaporator 600. It should be noted that the intake 7 and the outlet 8 of the evaporator 600 are arranged opposite the collecting box 62. Figs. 5 and 6 thus clearly show that through its compactness, the phase separator 5 may also make it possible to optimize the positioning of the evaporator 600 of the refrigerant circuit 1 of a vehicle, notably an automobile.

Moreover, this disclosure also extends to a method of manufacturing the phase separator 5. According to a first embodiment of the method of manufacture, the phase separator 5 is made by casting a material, for example metallic, in a suitable mould, followed by machining. Advantageously, and as shown more particularly in Figs. 2 and 3, a clearance zone 55 is provided on the phase separator 5, to allow passage of a tool configured for machining the transfer passage or passages 53 in the block 10 formed by the phase separator 5, in which the first channel 50 and the second channel 51 are arranged. This clearance zone 55 is then sealed by placement of a closing element 550. The phase separating element 52 and its flow disruptor 54 may then be inserted in the first channel 50, notably via the outlet 50b of the first channel 50 until it reaches a stop 50d. For better holding of the separating element 52 in the first channel 50, a groove may be provided on the stop 50d, said groove being intended to receive one of the longitudinal ends 520a, 520b of the separating element 52.

A second embodiment of the method then proposes that the phase separator 5 be made in the form of stamped plates, which are put together and then assembled. According to one embodiment example, the phase separator 5 is made in the form of two stamped plates, in such a way that each stamped plate forms a half-separator. The two half-separators are then put together and then assembled. In other words, referring to Figs. 2 and 3, the method according to the invention envisages making the phase separator 5 in the form of two half-separators put together in a plane containing the axes of longitudinal extension 500 of the first channel 50 and 510 of the second channel 51, respectively. Each of these channels 50, 51 is thus made in the form of a half-channel, and the same applies to the transfer passage or passages 53. According to the embodiment example more particularly illustrated in the figures, the first channel 50 and the second channel 51 are thus made in the form of half-cylinders. Of course, it is also possible to envisage forming the channels 1, 2 partially on one of the two plates and then attaching a second flat plate, i.e. not stamped, to form the phase separator 5.

The phase separating element 52 and its flow disruptor 54 may be positioned in either one of the half-channels, forming the first channel 50 once the plates are assembled. Finally, the two plates are assembled together, for example by welding. Through the saving of material that it offers, as well as through the simplicity of the stamping operation, such a method makes it possible to produce, at low cost, a phase separator that satisfies the requirements of reduced weight of the components of a motor vehicle. Moreover, the phase separator 5 produced in this way is more compact than a phase separator that is in the form of a block 10 of material, which further facilitates its integration in a refrigerant circuit.

It should be noted that in the case of a phase separator 5 integrated with a heat exchanger 6, the plates forming the phase separator 5 may be the plates forming the heat exchanger 6.

## Claims

1. Heat exchanger (6) of a circuit (1) of refrigerant (100) of a vehicle, incorporating liquid-gas phase separator (5) for a refrigerant (100), comprising:
- at least two channels (50, 51), with a first channel (50) extending longitudinally along a first axis (500) and a second channel (51) extending longitudinally along a second axis (510), the channels being located side by side,
- the first channel (50) comprises an inlet (50a) and an outlet (50b) and is positioned at an intake of the refrigerant (100) of the heat exchanger (6),
- the second channel (51) comprises an inlet (51a) and an outlet (51b), and is positioned at an outlet of the refrigerant (100) of the heat exchanger (6),
- a phase separating element (52) comprising pores and/or fibres, said phase separating element (52) being located in the first channel (50), and
- at least one transfer passage (53) joining the channels (50, 51) together.

2. Heat exchanger (6) according to Claim 1, **characterized in that** the phase separator (5) comprises a chamber (520c) between the phase separating element (52) and an inside face (50c) of the first channel (50).

3. Heat exchanger (6) according to the preceding claim, **characterized in that** the chamber (520c) is delimited longitudinally by contact of at least one of the longitudinal ends (520a, 520b) of the separating element (52) with the inside face (50c) of the first channel (50).

4. Heat exchanger (6) according to any one of the preceding claims, **characterized in that** the first channel (50) and the second channel (51) are approximately parallel to one another.

5. Heat exchanger (6) according to any one of the preceding claims, **characterized in that** the transfer passage(s) (53) joining the first channel (50) to the second channel (51) are arranged approximately perpendicularly to at least one of the first channel or the second channel (50, 51).

6. Heat exchanger (6) according to any one of the preceding claims, **characterized in that** the transfer passage(s) (53) open into the first channel (50) opposite the phase separating element (52).

7. Heat exchanger (6) according to any one of the preceding claims, **characterized in that** the phase separating element (52) comprises a flow disruptor (54), in a hollow portion.

## Patentansprüche

1. Wärmetauscher (6) eines Kreislaufs (1) von Kältemittel (100) eines Fahrzeugs, einen Flüssiggasförmig-Phasentrenner (5) für ein Kältemittel (100) enthaltend, der Folgendes umfasst:
- mindestens zwei Kanäle (50, 51), mit einem ersten Kanal (50), der sich längs entlang einer ersten Achse (500) erstreckt, und einem zweiten Kanal (51), der sich längs entlang einer zweiten Achse (510) erstreckt, wobei die Kanäle Seite an Seite befindlich sind,
- wobei der erste Kanal (50) einen Einlass (50a) und einen Auslass (50b) umfasst und an einem Eingang des Kältemittels (100) des Wärmetauschers (6) positioniert ist,
- wobei der zweite Kanal (51) einen Einlass (51a) und einen Auslass (51b) umfasst und an einem Auslass des Kältemittels (100) des Wärmetauschers (6) positioniert ist,
- ein Phasentrennelement (52), umfassend Poren und/oder Fasern, wobei das Phasentrennelement (52) im ersten Kanal (50) befindlich ist, und
- zumindest einen Transferdurchgang (53), der die Kanäle (50, 51) miteinander verbindet.

2. Wärmetauscher (6) nach Anspruch 1, **dadurch gekennzeichnet, dass** der Phasentrenner (5) eine Kammer (520c) zwischen dem Phasentrennelement (52) und einer Innenfläche (50c) des ersten Kanals (50) umfasst.

3. Wärmetauscher (6) nach dem vorhergehenden Anspruch, **dadurch gekennzeichnet, dass** die Kammer (520c) längs durch Kontakt von zumindest einem der Längsenden (520a, 520b) des Trennelements (52) mit der Innenfläche (50c) des ersten Kanals (50) begrenzt ist.

4. Wärmetauscher (6) nach einem der vorhergehenden Ansprüche, **dadurch gekennzeichnet, dass** der erste Kanal (50) und der zweite Kanal (51) annähernd parallel zueinander sind.

5. Wärmetauscher (6) nach einem der vorhergehenden Ansprüche, **dadurch gekennzeichnet, dass** der bzw. die Transferdurchgänge (53), die den ersten Kanal (50) mit dem zweiten Kanal (51) verbinden, annähernd senkrecht zu zumindest einem aus dem ersten Kanal oder dem zweiten Kanal (50, 51) angeordnet sind.

6. Wärmetauscher (6) nach einem der vorhergehenden Ansprüche, **dadurch gekennzeichnet, dass** sich der bzw. die Transferdurchgänge (53) in den ersten Kanal (50) gegenüber dem Phasentrennelement (52) öffnen.

7. Wärmetauscher (6) nach einem der vorhergehenden Ansprüche, **dadurch gekennzeichnet, dass** das Phasentrennelement (52) einen Flussunterbrecher (54) in einem hohlen Teil umfasst.

## Revendications

1. Échangeur de chaleur (6) d'un circuit (1) de fluide frigorigène (100) d'un véhicule, incorporant un séparateur de phases liquide-gaz (5) pour un fluide frigorigène (100), comprenant :
- au moins deux canaux (50, 51), avec un premier canal (50) s'étendant longitudinalement le long d'un premier axe (500) et un deuxième canal (51) s'étendant longitudinalement le long d'un deuxième axe (510), les canaux étant situés côte à côte,
- le premier canal (50) comprend une entrée (50a) et une sortie (50b) et est positionné au niveau d'une admission du fluide frigorigène (100) de l'échangeur de chaleur (6),
- le deuxième canal (51) comprend une entrée (51a) et une sortie (51b), et est positionné au niveau d'une sortie du fluide frigorigène (100) de l'échangeur de chaleur (6),
- un élément de séparation de phases (52) comprenant des pores et/ou des fibres, ledit élément de séparation de phases (52) étant situé dans le premier canal (50), et
- au moins un passage de transfert (53) joignant les canaux (50, 51) ensemble.

2. Échangeur de chaleur (6) selon la revendication 1, **caractérisé en ce que** le séparateur de phases (5) comprend une chambre (520c) entre l'élément de séparation de phases (52) et une face intérieure (50c) du premier canal (50).

3. Échangeur de chaleur (6) selon la revendication précédente, **caractérisé en ce que** la chambre (520c) est délimitée longitudinalement par contact d'au moins une des extrémités longitudinales (520a, 520b) de l'élément de séparation (52) avec la face intérieure (50c) du premier canal (50).

4. Échangeur de chaleur (6) selon l'une quelconque des revendications précédentes, **caractérisé en ce que** le premier canal (50) et le deuxième canal (51) sont approximativement parallèles l'un à l'autre.

5. Échangeur de chaleur (6) selon l'une quelconque des revendications précédentes, **caractérisé en ce que** le(s) passage(s) de transfert (53) joignant le premier canal (50) au deuxième canal (51) est/sont agencé(s) approximativement perpendiculairement à au moins un canal parmi le premier canal ou le deuxième canal (50, 51) .

6. Échangeur de chaleur (6) selon l'une quelconque des revendications précédentes, **caractérisé en ce que** le(s) passage(s) de transfert (53) débouche(nt) dans le premier canal (50) opposé à l'élément de séparation de phases (52).

7. Échangeur de chaleur (6) selon l'une quelconque des revendications précédentes, **caractérisé en ce que** l'élément de séparation de phases (52) comprend un perturbateur d'écoulement (54), dans une partie creuse.
